# EUROPÄISCHE PATENTSCHRIFT

(11) **EP 2 583 859 B1**
(45) Veröffentlichungstag und Bekanntmachung des Hinweises auf die Patenterteilung: **28.06.2017**
(21) Anmeldenummer: 12188647.7
(22) Anmeldetag: 16.10.2012
(51) Int. Cl.: B60L 11/18

(54) **Ladekabel sowie Ladesystem für Elektrofahrzeuge**
Charging cable and charging system for electric vehicles
Câble de chargement ainsi que système de chargement pour véhicules électriques

(30) Priorität: 20.10.2011 AT 15382011
(43) Veröffentlichungstag der Anmeldung: 24.04.2013
(73) Patentinhaber: Schitter, Volkmar, 5400 Hallein (AT); Schitter, Eckhard, 5400 Hallein (AT); Stranger, Rupert, 5541 Altenmarkt im Pongau (AT)
(72) Erfinder: Schitter, Volkmar, 5400 Hallein (AT); Schitter, Eckhard, 5400 Hallein (AT); Stranger, Rupert, 5541 Altenmarkt im Pongau (AT)
(74) Vertreter: Babeluk, Michael

(56) Entgegenhaltungen:
- EP-A2- 2 292 460
- DE-A1-102008 042 677
- US-A- 5 349 535
- US-A1- 2011 241 619
- "IEC 61851-1:2010 - Electric vehicle conductive charging system - Part 1: General requirements", INTERNATIONAL STANDARD - IEC NORME INTERNATIONALE - CEI, X, XX, Bd. ed2.0, Nr. IEC 61851-1:2010, 25. November 2010 (2010-11-25), Seiten 1-104, XP008147718,
- "Mein persönlich konfiguriertes E-LION-Antriebstechnologie", , 28. September 2011 (2011-09-28), XP055143915, Gefunden im Internet: URL:http://www.hans-keffert.de/Simplon%20S ilk-Ebike.pdf [gefunden am 2014-10-01]

## Beschreibung

Die Erfindung betrifft ein Ladesystem zum Aufladen von Elektrofahrzeugen an einer öffentlichen Ladestation.

Die Infrastruktur für die mobile Aufladung von Elektrofahrrädern, E-Bikes oder Pedelecs ist erst im Aufbau begriffen. Auf dem Markt befindliche Elektrofahrräder weisen unterschiedlichste Akkusysteme und darauf jeweils abgestimmte Ladegeräte auf, wobei der Ladevorgang meist zu Hause beim Anwender erfolgt. Für ein mobiles Aufladen bzw. Nachladen stehen nur wenige öffentliche Ladestation zur Verfügung, wobei das eigene Heim-Ladegerät zu diesem Zweck mitgeführt werden muss. Einige bekannte Ladegeräte müssen auf den Boden gestellt werden, damit der aufzuladende Akku in eine Aufnahmeschale eingesteckt werden kann. Dies birgt im Freien, insbesondere bei feuchter Witterung, Risken und Gefahren durch Stromschlag sowie Verschmutzung des Ladegerätes.

Es sind auch öffentliche Ladestationen mit integrierten Ladegeräten bekannt, bei welchen der Zugang zur Ladestation aber ausschließlich jenen Personen vorbehalten bleibt, die auch das zur Ladestation passende Elektrofahrrad benutzen. Im Wesentlichen handelt es sich dabei meist um regionale Anbieter von Leihrädern, beispielsweise eines Energieversorgers oder Tourismusverbandes. Alle anderen Nutzer von Elektrofahrrädern außerhalb dieser Nutzergruppe können an derartigen Ladestationen nur dann auftanken bzw. nachladen, wenn an der Ladestation auch ein 240 V-Anschluss vorhanden ist und der Benutzer sein eigenes Heim-Ladergerät mitführt.

Aus der DE 195 17 117 A1 ist eine Vorrichtung zum Übertragen von Daten, wie z.B. Spannungslage, Elektrolytmaterial, etc., von einem Energiespeicher (Batterie) an ein damit in Verbindung stehendes Steuergerät bekannt, wobei der Energiespeicher Mittel zum Speichern der Daten und das Steuergerät Mittel zum Erfassen der Daten aufweist, so dass ein Übertragen der Daten von dem Energiespeicher an das Steuergerät ermöglicht wird.

Weiters ist der DE 10 2009 043 306 A1 ist ein Überwachungssystem und Verfahren zum Überwachen einer Energieübertragung zwischen einer ersten Energieeinheit und einer zweiten Energieeinheit bekannt. Beispielsweise findet eine Energieübertragung zwischen einer Gebäudesteckdose und einem Elektrofahrzeug statt, wobei sich eine RFID-Identifikationseinheit in der ersten Energieeinheit (Gebäudesteckdose) und eine RFID-Identifikationsempfangseinheit an der zweiten Energieeinheit (Elektrofahrzeug) befindet.

Die US 2011/0241619 A1 zeigt ein Ladesystem mit mehreren, verteilt angeordneten Ladestationen eines Abstellbereiches für Elektrofahrzeuge, in welchen sich jeweils Schnellladestationen befinden. An den Schnellladestationen können die Akkus von Elektrofahrzeugen, wie Elektrobusse, Elektrostapler oder auch Elektrofahrräder rasch aufgeladen werden. Es ist allerdings nicht möglich, mit den Ladestationen Akkus mit unterschiedlichen Niedervoltspannungen und unterschiedlichen Stromstärken aufzuladen.

Aus der EP 2 292 460 A2 ist weiterhin ein Steckerelement für ein Ladekabel bekannt, mit welchem elektrische Energie von einer Ladestation zu einem elektrisch betriebenen Fahrzeug übertragbar ist. Im Steckerelement befindet sich ein Datenspeicher zur Speicherung von Identifikationsinformationen. Diese Informationen sind aus dem Datenspeicher auslesbar und können vom Steckerelement an die Ladestation übertragen werden. Die gespeicherten Daten dienen der Benutzeridentifikation sowie um die Berechtigung zum Energiebezug festzustellen und die Abrechnung zu erleichtern. Weiters können auch Angaben zum maximal zulässigen Ladestrom an die Ladestation übertragen werden.

Aufgabe der Erfindung ist es ein Ladesystem zum Aufladen von Elektrofahrzeugen derart weiterzubilden, dass es möglichst vielen Benutzern von Elektrofahrzeugen, insbesondere von Elektrofahrrädern, E-Bikes oder Pedelecs möglich ist, deren Fahrzeug auf einfache Weise mobil aufzuladen.

Erfindungsgemäß ist dafür ein Ladesystem vorgesehen, das durch folgende Punkte gekennzeichnet ist:
- eine öffentliche Ladestation mit einer regelbaren Einrichtung zur Bereitstellung unterschiedlicher Niedervoltspannungen im Bereich unter 50 Volt und unterschiedlicher Stromstärken, mit mehreren gleichartigen Steckverbindern, beispielsweise Anschlussbuchsen,
- eine Gruppe von Ladekabeln, wobei alle Ladekabel gleichartige, erste Steckverbinder zum Anschluss an die Steckverbinder der Ladestation und individuell an den jeweiligen Akku des Elektrofahrzeugs angepasste, zweite Steckverbinder zur Herstellung einer elektrischen Verbindung zum Akku des Elektrofahrzeugs aufweisen,
- den Anschluss von Elektrofahrradakkus an die öffentliche Ladestation mittels dieser Ladekabel zwecks Aufladung,
- wobei im ersten Steckverbinder der Ladekabel eine von der Ladestation auslesbare Codierung angeordnet ist, die technische Informationen, wie Ladezyklus, Ladespannung und Ladestrom, des aufzuladenden Akkus bereit hält und die Einrichtung zur Bereitstellung der jeweiligen Niedervoltspannung und Stromstärke regelt.

Der große Vorteil des erfindungsgemäßen Ladesystems besteht darin, dass dieses für unterschiedliche Modelle von Elektrofahrrädern mit unterschiedlichsten Akkusystemen offen ist. Das System ist auch jederzeit erweiterbar, da ein neues Akku-Modell durch ein entsprechend codiertes Ladekabel in das System integrierbar ist.

Um eine Verbindung mit der Ladestation herzustellen, muss am Elektrofahrrad lediglich ein Ladekabel mitgeführt werden, das Mitschleppen des eigenen Heim-Ladegeräts entfällt. Das Ladekabel kann aufgerollt in einer Satteltasche mitgeführt werden.

Im Freien muss nun keine Steckverbindung an einer 240 V-Steckdose hergestellt werden, so dass die Gefahr von durch Feuchtigkeit am Ladegerät verursachter Stromschläge entfällt.

Weitere Vorteile der Erfindung werden im Folgenden anhand von zum Teil schematischen Zeichnungen näher erläutert. Es zeigen:
- Fig. 1: ein erfindungsgemäßes Ladesystem zum Aufladen von Elektrofahrrädern, in einer schematischen Darstellung;
- Fig. 2: ein ersten Detail einer Ausführungsvariante des Ladesystems nach Fig. 1;
- Fig. 3: ein zweites Detail einer Ausführungsvariante des Ladesystems nach Fig. 1;
- Fig. 4: ein Ladekabel einer ersten Ausführungsvariante;
- Fig. 5: ein Ladekabel in einer zweiten Ausführungsvariante; sowie
- Fig. 6: eine Ausführungsvariante einer erfindungsgemäßen Ladestation.

Unter 'Steckverbinder' wird im Folgenden die Teile einer zweiteiligen, elektrischen Steckverbindung bezeichnet, welche sowohl als Stecker (männlicher Teil der Steckverbindung mit nach außen weisenden Kontaktstiften) als auch als Kupplung (weiblicher Teil der elektrischen Steckverbindung mit nach innen weisenden Kontaktöffnungen) eines Ladekabels ausgeführt sein können.

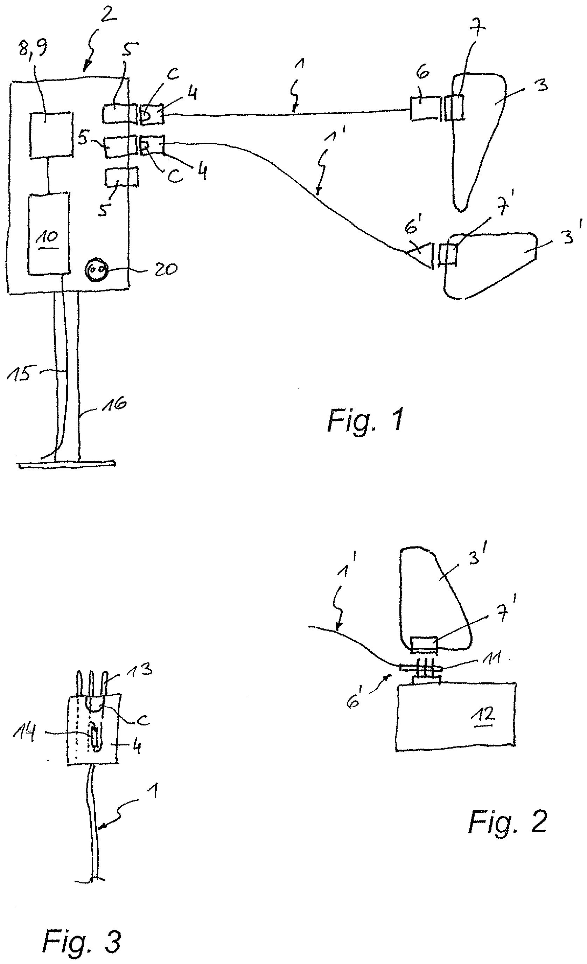

In der schematischen Darstellung gemäß Fig. 1 ist ein Ladesystem zum Aufladen von Elektrofahrrädern dargestellt. An der öffentlichen Ladestation 2 *(bike energy base)* sind über die beiden Ladekabel 1, 1' *(docking strips)* zwei unterschiedliche Akkus 3, 3' von nicht weiter dargestellten Elektrofahrrädern zum Aufladen angeschlossen.

Das in Fig. 1 obere Ladekabel 1 weist einen ersten Steckverbinder 4 auf, der mit einem Steckverbinder 5, beispielsweise einer Steckbuchse, an der Ladestation 2 verbunden ist, wobei der erste Steckverbinder 4 eine von der Ladestation 2 auslesbare Codierung C aufweist, die technische Informationen (wie Ladezyklus, Ladespannung, Ladestrom, etc.) des aufzuladenden Akkus 3 bereit hält. Ähnliches gilt für das zweite Ladekabel 1', das einen gleichartigen, ersten Steckverbinder 4, jedoch mit einer vom Ladekabel 1 abweichenden Codierung C aufweist, die technische Informationen des aufzuladenden Akkus 3' bereit hält. Wahlweise können weitere Ladekabel an den freien Steckverbindern 5 der Ladestation 2 angeschlossen werden.

Der zweite, individuelle Steckverbinder 6 bzw. 6' der beiden Ladekabel 1, 1' ist an die unterschiedlichen Steckverbinder 7 bzw. 7' am jeweiligen Akku 3, 3' der Elektrofahrräder angeschlossen. Die Steckverbinder 7, 7' an den Akkus 3, 3' können beispielsweise als Steckbuchsen ausgeführt sein.

Gemäß einer bevorzugten Ausführungsvariante können die Steckverbinder 5 der Ladestation 2 jeweils an einem aus der Ladestation 2 ausziehbaren oder ausrollbaren Kabel befestigt sein, wodurch das eigentliche Ladekabel 1, 1' sehr kurz (beispielsweise nur ca. 10 cm lang) und kompakt ausgeführt werden kann. Vorteilhaft sind auch das geringere Gewicht und das kleine Volumen des mitzuführenden Ladekabels. Die Steckverbinder 5 können an deren Kabel (z.B. Spiralkabel) etwa 100 cm aus der Ladestation 2 herausgezogen und zum E-Bike geführt werden. Weiters kann auch eine federbelastete Aufrolleinrichtung für das ausrollbare Kabel in der Ladestation 2 vorgesehen sein.

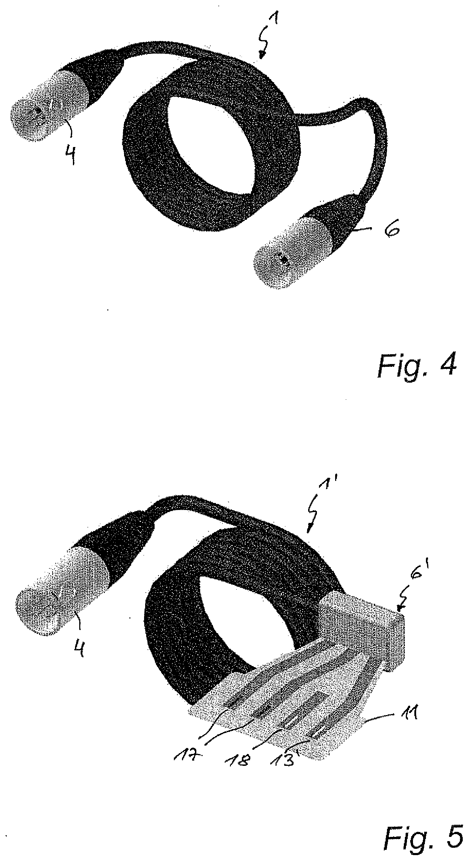

Das Ladesystem besteht somit im Wesentlichen aus der öffentlichen Ladestation 2 mit einer regelbaren Einrichtung 10 zur Bereitstellung unterschiedlicher Niedervoltspannungen im Bereich unter 50 Volt und unterschiedlicher Stromstärken, die mehrere gleichartige Steckverbinder 5 aufweist und einer Gruppe von Ladekabeln 1, 1', wobei alle Ladekabel gleichartige, codierte Steckverbinder 4 zum Anschluss an die Ladestation 2 und individuell an den jeweiligen Akku 3, 3' angepasste zweite Steckverbinder 6, 6' aufweisen (siehe Fig. 4 und Fig. 5).

Die Ladestation 2 weist einen Netzanschluss 15 auf, der durch den Standfuß 16 geführt sein kann, wobei zusätzlich ein 240 V Anschluss 20 vorgesehen sein kann.

Es sind unterschiedliche Arten der Codierung im ersten Steckverbinder 4 der einzelnen Ladekabel 1, 1' möglich, beispielsweise:
ein Barcode, Farbcode, etc., der von einer optischer Leseeinrichtung 8 in der Ladestation 2 auslesbar ist,
ein RFID-Chip, der von einer elektronischen Empfängereinheit 9 in der Ladestation 2 auslesbar ist, oder
zumindest ein zusätzlicher Codierpin 13 (siehe Fig. 3), der mit einer entsprechenden Kapazität, Induktivität oder Widerstand 14 im ersten Steckverbinder 4 verbunden ist und die Einrichtung 10 zur Bereitstellung unterschiedlicher Niedervoltspannungen und unterschiedlicher Stromstärken regelt.

Wie in der Ausführungsvariante gemäß Fig. 2 dargestellt, kann der zweite Steckverbinder 6' des Ladekabels 1' als Steckerkarte 11 ausgebildet sein, die in eine elektrische Steckverbindung zwischen dem Motor 12 und dem Akku 3' des Elektrofahrzeugs einfügbar ist. Ein derartiges Ladekabel ist im Detail in Fig. 5 dargestellt, wobei die Steckerkarte 11 in Form einer Leiterplatte vorliegt und beispielsweise vier Kontaktbahnen (zwei Ladekontakte 17, einen Leerkontakt 18 und einen Codierkontakt 13') aufweist, die auf die Kontaktstifte des Motors 12 vor der Anbringung des Akkus 3' aufgesteckt werden. Diese Verbindung kann auch beim Betrieb des Elektrofahrrades bestehen bleiben, so dass beim Ladevorgang lediglich der erste Steckverbinder 4 des zuvor aufgerollten Ladekabels 1' an den Steckverbinder 5 der Ladestation 2 angeschlossen werden muss.

Zumindest die Steckverbindung des Ladekabels 1, 1' zur Ladestation 2 und ggf. auch jene zum Akku 3 können als Magnetstecker ausgeführt sein, wobei die Steckverbinder 4 und 5 bzw. 6 und 7 Permanentmagnete aufweisen, die einen Großteil der Haltekraft der Steckverbindung bereitstellen. Beschädigungen des Ladekabels oder der Ladestation durch ein unachtsames Auftrennen der Steckverbindung können dadurch minimiert werden.

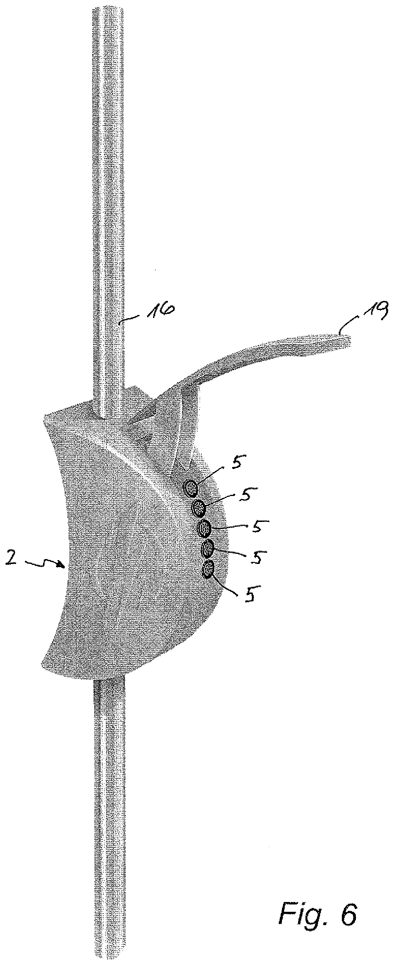

Fig. 6 zeigt ein konkretes Ausführungsbeispiel einer kompakten Ladestation 2, bei welcher die Steckverbinder bzw. Steckbuchsen 5 für die Ladekabel nach dem Öffnen einer Verschlussklappe 19 frei zugängig sind.

Durch die Anbringung der Codierung im Ladekabel 1, 1', bzw. in dem mit der Ladestation 2 verbindbaren Steckverbinder 4 des Ladekabels ergeben sich erfindungsgemäß große Vorteile, da das System beliebig erweiterbar ist. Bestehende Akkus von Elektrofahrzeugen bzw. Elektrofahrrädern können - ohne Veränderungen am Akku vornehmen zu müssen - mit einem erfindungsgemäßen Ladekabel 1, 1' an die Ladestation 2 angeschlossen werden, wobei die für den Akku relevanten Daten in der Codierung des Ladekabels zur Auslesung für die Ladestation 2 bereit gehalten werden.

## Patentansprüche

1. Ladesystem zum Aufladen von Elektrofahrrädern an einer öffentlichen Ladestation, **gekennzeichnet durch**:
- eine öffentliche Ladestation (2) mit einer regelbaren Einrichtung (10) zur Bereitstellung unterschiedlicher Niedervoltspannungen im Bereich unter 50 Volt und unterschiedlicher Stromstärken, mit mehreren gleichartigen Steckverbindern (5), beispielsweise Anschlussbuchsen,
- eine Gruppe von Ladekabeln (1, 1'), wobei alle Ladekabel gleichartige, erste Steckverbinder (4) zum Anschluss an die Steckverbinder (5) der Ladestation (2) und individuell an den jeweiligen Akku (3, 3') des Elektrofahrrads angepasste zweite Steckverbinder (6, 6') zur Herstellung einer elektrischen Verbindung zum Akku (3, 3') des Elektrofahrrads aufweisen,
- den Anschluss von Elektrofahrradakkus an die öffentliche Ladestation mittels dieser Ladekabel zwecks Aufladung,
wobei im ersten Steckverbinder (4) der Ladekabel (1, 1') eine von der Ladestation (2) auslesbare Codierung (C) angeordnet ist, die technische Informationen, wie Ladezyklus, Ladespannung und Ladestrom, des aufzuladenden Akkus (3, 3') bereit hält und die Einrichtung (10) zur Bereitstellung der jeweiligen Niedervoltspannung und Stromstärke regelt.

2. Ladesystem nach Anspruch 1, **dadurch gekennzeichnet, dass** der zweite Steckverbinder (6') des Ladekabels (1') als Steckerkarte (11) ausgebildet ist, die in eine elektrische Steckverbindung zwischen einem Motor (12) und dem Akku (3') des Elektrofahrrads einfügbar ist.

3. Ladesystem nach Anspruch 1 oder 2, **dadurch gekennzeichnet, dass** im ersten Steckverbinder (4) des Ladekabels (1, 1') zur Codierung ein Barcode vorgesehen ist, der von einer optischen Leseeinrichtung (8) in der Ladestation (2) auslesbar ist.

4. Ladesystem nach Anspruch 1 oder 2, **dadurch gekennzeichnet, dass** im ersten Steckverbinder (4) des Ladekabels (1, 1') zur Codierung ein RFID-Chip angeordnet ist, der von einer elektronischen Empfängereinheit (9) in der Ladestation (2) auslesbar ist.

5. Ladesystem nach Anspruch 1 oder 2, **dadurch gekennzeichnet, dass** im ersten Steckverbinder (4) des Ladekabels (1, 1') zur Codierung zumindest ein zusätzlicher Codierpin (13) angeordnet ist, der mit einer entsprechenden Kapazität, Induktivität oder Widerstand (14) im ersten Steckverbinder (4) verbunden ist.

6. Ladesystem nach einem der Ansprüche 1 bis 5, **dadurch gekennzeichnet, dass** die Steckverbindung des Ladekabels (1, 1') zur Ladestation (2) und ggf. zum Akku (3) als Magnetstecker ausgeführt ist.

7. Ladesystem nach einem der Ansprüche 1 bis 6, **dadurch gekennzeichnet, dass** zumindest einer der Steckverbinder (5) der Ladestation (2) an einem aus der Ladestation (2) ausziehbaren oder ausrollbaren Kabel befestigt ist.

## Claims

1. A charging system for charging electric bicycles at a public charging station, **characterised by**:
- a public charging station (2) with a controllable device (10) for providing different low-voltage voltages in the range below 50 volts and different current intensities, with a plurality of similar plug connectors (5), for example connection sockets,
- a group of charging cables (1, 1'), wherein all charging cables comprise similar first plug connectors (4) for the connection to the plug connectors (5) of the charging station (2) and second plug connectors (6, 6') adapted individually to the respective rechargeable battery (3, 3') of the electric bicycle for producing an electrical connection to the rechargeable battery (3, 3') of the electric bicycle,
- the connection of the rechargeable batteries of the electric bicycle to the public charging station by means of said charging cables for charging purposes,
- wherein a coding (C) is arranged in the first plug connector (4) of the charging cable (1, 1'), which coding can be read out by the charging station (2) and provides technical information such as the charging circuit, charging voltage and charging current of the rechargeable battery (3, 3 ') to be charged and controls the device (10) for providing the respective low voltage and current intensity.

2. A charging system according to claim 1, **characterised in that** the second plug connector (6') of the charging cable (1') is designed as a plug-in card (11), which is inserted into an electrical plug connection between a motor (12) and the battery (3') of the electric bicycle.

3. A charging system according to claim 1 or 2, **characterised in that** a bar code is provided in the first plug connector (4) of the charging cable (1, 1') for coding purposes, which can be read by an optical reading device (8) in the charging station (2).

4. A charging system according to claim 1 or 2, **characterised in that** an RFID chip is arranged in the first connector (4) of the charging cable (1, 1') for coding purposes, which can be read by an electronic receiver unit (9) in the charging station (2).

5. A charging system according to claim 1 or 2, **characterised in that** at least one additional coding pin (13) is arranged in the first plug connector (4) of the charging cable (1, 1') for coding purposes, which is connected to a respective capacitance, inductance or resistor (14) in the first plug connector (4).

6. A charging system according to one of claims 1 to 5, **characterised in that** the plug connection of the charging cable (1, 1') to the charging station (2) and optionally to the rechargeable battery (3) is designed as a magnetic plug.

7. A charging system according to one of claims 1 to 6, **characterised in that** at least one of the plug connectors (5) of the charging station (2) is fastened to a cable which can be pulled out or rolled out of the charging station (2).

## Revendications

1. Système de charge de vélos électriques dans un poste de charge public,
**caractérisé par** :
- un poste de charge public (2) équipé d'un dispositif réglable (10) permettant de fournir différentes basses-tensions situées dans une plage inférieure à 50 Volts et différentes intensités de courant, et ayant plusieurs connecteurs à fiches (5), en particulier douilles de connexion similaires,
- un ensemble de câbles de charge (1, 1'), tous les câbles de charge comportant, de manière similaire, un premier connecteur à fiches (4) pouvant être connecté sur les connecteurs à fiches (5) du poste de charge (2), et un second connecteur à fiches (6, 6') individuellement adapté à l'accumulateur propre (3, 3') du vélo électrique pour permettre d'obtenir une liaison électrique avec cet accumulateur (3, 3'),
- la connexion de l'accumulateur du vélo électrique avec le poste de charge public au moyen de ce câble de charge permettant la charge,
le premier connecteur à fiches (4) du câble de charge (1, 1') comprenant un codage (C) pouvant être lu par le poste de charge (2) fournissant des informations techniques telles que le cycle de charge, la tension de charge et le courant de charge de l'accumulateur devant être chargé (3, 3'), et réglant l'installation (10) pour lui permettre de fournir la basse tension et l'intensité de courant adaptées.

2. Système de charge conforme à la revendication 1,
**caractérisé en ce que**
le second connecteur à fiches (6') du câble de charge (1') est réalisé sous la forme d'une carte enfichable (11) qui peut être introduite dans une connexion par enfichage électrique entre le moteur (12) et l'accumulateur (3') du vélo électrique.

3. Système de charge conforme à la revendication 1 ou 2,
**caractérisé en ce que**
dans le premier connecteur à fiches (4) du câble de charge (1, 1'), il est prévu pour le codage, un code-barres qui peut être lu par un dispositif de lecture optique (8) du poste de charge (2).

4. Système de charge conforme à la revendication 1 ou 2,
**caractérisé en ce que**
pour le codage il est prévu dans le premier connecteur à fiches (4) du câble de charge (1, 1') une puce RFID qui peut être lue par une unité de réception électronique (9) du poste de charge (2).

5. Système de charge conforme à la revendication 1 ou 2,
**caractérisé en ce que**
pour le codage, il est prévu dans le premier connecteur à fiches (4) du câble de charge (1, 1') est montée au moins une broche de codage complémentaire (13) qui est reliée à un condensateur, une inductance ou une résistance (14) du premier connecteur à fiches (4).

6. Système de charge conforme à l'une des revendications 1 à 5, **caractérisé en ce que**
la connexion par enfichage du câble de charge (1, 1') avec le poste de charge (2) et le cas échéant l'accumulateur (3) est réalisée sous la forme d'une fiche magnétique.

7. Système de charge conforme à l'une des revendications 1 à 6, **caractérisé en ce qu'**
au moins l'un des connecteurs à fiches (5) du poste de charge (2) est relié à un câble pouvant être tiré ou déroulé du poste de charge (2).
